# EUROPEAN PATENT SPECIFICATION

(11) **EP 4 122 786 B1**
(45) Date of publication and mention of the grant of the patent: **31.01.2024**
(21) Application number: 22185037.3
(22) Date of filing: 14.07.2022
(51) Int. Cl.: B60T 13/74, F16D 65/16, F16D 28/00, F16D 41/066, F16D 121/24, F16D 125/52, F16D 125/66, F16D 127/02, F16D 127/06

(54) **PARKING MECHANISM, ELECTRONIC MECHANICAL BRAKE SYSTEM, AND VEHICLE**
PARKMECHANISMUS, ELEKTRONISCH-MECHANISCHES BREMSSYSTEM UND FAHRZEUG
MÉCANISME DE STATIONNEMENT, SYSTÈME DE FREINAGE MÉCANIQUE ÉLECTRONIQUE, ET VÉHICULE

(30) Priority: 20.07.2021 CN 202110819715
(43) Date of publication of application: 25.01.2023
(73) Proprietor: Huawei Digital Power Technologies Co., Ltd., Shenzhen, 518043 (CN)
(72) Inventor: HE, Yuhui, Shenzhen, 518129 (CN); HE, Jianjun, Shenzhen, 518129 (CN); WAN, Yongjian, Shenzhen, 518129 (CN); NI, Hui, Shenzhen, 518129 (CN)
(74) Representative: Gill Jennings & Every LLP

(56) References cited:
- DE-A1-102004 023 331
- DE-A1-102006 000 746
- JP-A- 2001 130 402
- US-A1- 2011 094 836
- US-B1- 6 761 252

## Description

### TECHNICAL FIELD

This invention relates to the field of vehicle braking technologies, and in particular, to a parking mechanism, an EMB system, and a vehicle.

### BACKGROUND

Different from a conventional brake that uses hydraulic pressure to push a piston to push a friction sheet, an electronic mechanical brake (EMB) system is a brake that uses a wheel-end motor to drive a reducer, then to drive a mechanical structure (for example, a ball screw, a cam mechanism, or a slider-crank mechanism) that converts rotational motion into linear motion, and to finally drive the friction sheet to implement braking.

An electronic parking brake (EPB) unit needs to be integrated into the EMB system for the following two reasons: 1. A motor and a motion mechanism of the EMB system may generate braking force, and this set of EMB system may be used to reduce costs. 2. The motion mechanism of the EMB system is non-self-locking. After the motor of the EMB system is powered off, the motion mechanism rebounds and releases braking. If the motor of the EMB system is powered on for a long time, a serious heating problem may occur. The EPB unit can lock the motion mechanism of the EMB system when long-time braking is required. In this way, the motion mechanism cannot rebound and braking is maintained.

At present, integration of the EPB unit into the EMB system can implement parking, but a change of parking force is mostly stepwise, and a vehicle may slide when the parking force increases. DE 10 2004 023331 A1 discusses a switchable freewheel for developing an electromechanical vehicle brake (service brake) into a parking brake. DE 10 2006 000746 A1 discusses a wheel which has locking units that are arranged between a shaft and an outer ring. JP 2001 130402 A discusses an electric brake comprising a power transmitting converting mechanism for converting the torque of an electric motor into the linear motion and pressing a braking member to a member to be braked. US 6 761 252 B1 discusses an electromechanically actuated partially lined disk brake suitable both for realizing driving and parking brake functions. US 2011/094836 A1 discusses a transmission device includes a mounting frame having an abutting member, a driving sleeve sleeved fixedly on a drive shaft extending through the base plate, a transmission wheel sleeved rotatably on the driving sleeve, and a connecting post extending through a radially extending through hole in the transmission wheel and into a spiral first guiding groove in the driving sleeve having opposite first and second ends.

### SUMMARY

This invention provides a parking mechanism, an EMB system, and a vehicle, to provide stepless variable parking force for braking a vehicle to standstill. This can implement unidirectional locking when the parking force increases.

According to a first aspect, this invention provides a parking mechanism. The parking mechanism may be integrated into an EMB system of a vehicle to brake and park the vehicle. The parking mechanism includes a wheel disc, a wedge disc, and a drive assembly. The wheel disc is configured to be fixedly connected to a motor shaft of a brake system (for example, an EMB system), and may rotate with the motor shaft of the brake system. The wedge disc is fastened relative to a motor housing of the brake system, and when the motor shaft of the brake system rotates, the wheel disc rotates relative to the wedge disc. Specifically, an axis of the wheel disc and an axis of the wedge disc are aligned with an axis of the motor shaft of the brake system. Therefore, the wheel disc rotates with the motor shaft and relative to the wedge disc by using the axis of the motor shaft as a rotation axis. A wedge groove with an opening facing the wheel disc is formed on a surface of the wedge disc facing the wheel disc, a movable part in contact with the wheel disc is disposed in the wedge groove, and in a direction from a bottom of the wedge groove to the wheel disc, a groove depth at a first end of the wedge groove is greater than a size of the movable part, and a groove depth at a second end of the wedge groove is less than the size of the movable part. When the movable part moves between the first end and the second end of the wedge groove, friction between the movable part and the wheel disc changes. An elastic part is disposed between the movable part and the first end of the wedge groove, and the elastic part is in a compressed energy storage state, so that the elastic part has a trend of driving the movable part to move from the first end to the second end of the wedge groove. It may be predicted that when the movable part is driven by the elastic part to move from the first end to the second end of the wedge groove, the movable part is pressed to the wheel disc due to a limitation of a structure of the wedge groove, and the friction between the movable part and the wheel disc will gradually increase. The drive assembly is configured to drive the movable part to move against elastic potential energy of the elastic part and from the second end to the first end of the wedge groove.

It can be learned that, when the parking mechanism provided in this invention is used in the brake system for parking, the elastic part driven by the drive assembly may cooperate with the wedge groove to apply pressure to the movable part. Plenty of friction are generated between the movable part and the wheel disc, the wheel disc is fastened relative to the wedge disc, and the motor shaft of the brake system is fastened relative to the motor housing, to implement braking of the vehicle to standstill. In this case, the motor shaft of the brake system is locked. When the parking needs to be canceled, the drive assembly is controlled to drive the movable part to move from the second end to the first end in the wedge groove. The friction between the movable part and the wheel disc gradually becomes smaller or even may be ignored. In this case, the wheel disc rotates relative to the wedge disc, so that the motor shaft rotates relative to the motor housing, and the motor shaft of the brake system is not locked. Because motion of the movable part in the wedge groove is consecutive, the parking mechanism can implement stepless adjustment of parking force, and cooperation between the movable part and the wedge groove can implement unidirectional locking when the parking force increases.

In a possible implementation, the wedge disc is in a ring shape, and a cylindrical hole is disposed in a center of the wedge disc. A size of the cylindrical hole matches a peripheral surface of the wheel disc, so that the wedge disc is sleeved on the wheel disc. Based on a structure of the wheel disc and the wedge disc, the wedge groove is formed on an inner wall of the wedge disc in contact with a round hole of the wheel disc.

In some possible implementations, the movable part may be of a cylindrical structure, a spherical structure, or another similar structure. Such a structure facilitates motion of the movable part in the wedge groove. The elastic part may be a spring or a spring plate. It may be understood that, when the movable part is of a spherical structure and the elastic part is a spring, the elastic part may be in good contact with the movable part to bear force.

Based on the structure of the wheel disc and the wedge disc, in a possible implementation, the drive assembly includes a drive disc, and in an extension direction of the motor shaft of the brake system, the drive disc may be disposed on any side of the wheel disc and the wedge disc. An axis of the drive disc is aligned with the axis of the motor shaft, and the drive disc rotates relative to the wedge disc and around the axis of the motor shaft. The drive disc has a drive block, and the drive block extends into the wedge groove and is located at a side of the movable part away from the elastic part. When the drive disc rotates relative to the wedge disc by using the axis of the motor shaft as a rotation axis, the drive block moves in the wedge groove. In addition, when the drive block moves with the drive disc and from the second end to the first end in the wedge groove, the drive block drives the movable part to move against the elastic potential energy of the elastic part and to the first end. This unlocks the locking of the motor shaft.

The drive assembly further includes a power source that drives the drive disc to rotate. The power source may be specifically an electromagnetic drive structure, and is configured to drive the drive disc to rotate by using the axis of the motor shaft as a rotation axis.

To implement self-locking of the parking mechanism when the electromagnetic drive structure is powered off, the drive assembly may further include a transmission rod. An outer thread is formed by rotating a peripheral surface of the transmission rod around an axis of the transmission rod. Accordingly, a worm gear is formed at an edge of the drive disc, and the worm gear is engaged with the thread. Therefore, the transmission rod and the drive disc form a worm gear and worm assembly, to implement self-locking.

In addition, a wrench interface is further disposed at an end of the transmission rod away from the electromagnetic drive structure. The wrench interface may be in a hexagonal prism shape, an inner hexagonal shape, a torx shape, or the like. When the electromagnetic drive structure is powered off, a worker may operate the parking mechanism by using a wrench acting on the wrench interface, to unlock the motor shaft of the brake system.

According to a second aspect, this invention further provides an EMB system, including a motor, a reducer, and the parking mechanism in any one of the foregoing technical solutions. The motor is in transmission connection to the reducer by using a motor shaft, a wheel disc of the parking mechanism is fixedly connected to the motor shaft, and a wedge disc of the parking mechanism is fastened relative to a motor housing of the motor. The EMB system can implement braking by using the foregoing parking mechanism, and achieve all beneficial effects of the parking mechanism. Details are not described herein again.

According to a third aspect, this invention further provides a vehicle. The vehicle includes a vehicle body, a wheel hub, and the EMB system. A motor shaft of the EMB system is in transmission connection to the wheel hub, and finally the braking is achieved by braking the wheel hub.

### BRIEF DESCRIPTION OF DRAWINGS

FIG. 1 is a schematic diagram of a structure of a parking mechanism according to an embodiment of this invention;
FIG. 2 is a schematic diagram of a structure of a wheel disc and a wedge disc cooperating with each other in a parking mechanism according to an embodiment of this invention;
FIG. 3 is a schematic diagram of a state that a movable part approaches a second end of a wedge groove in a parking mechanism according to an embodiment of this invention;
FIG. 4 is a schematic diagram of a structure of a parking mechanism according to an embodiment of this invention;
FIG. 5 is a main view of a parking mechanism according to an embodiment of this invention;
FIG. 6 is a schematic diagram of a C-C sectional view of a structure in FIG. 5;
FIG. 7 is an isometric diagram of a parking mechanism according to an embodiment of this invention;
FIG. 8a and FIG. 8b are schematic diagrams of a working principle of a parking mechanism according to an embodiment of this invention;
FIG. 9a and FIG. 9b each are a schematic diagram of a structure of an EMB system according to an embodiment of this invention;
FIG. 10 is a schematic diagram of a structure of an EMB system according to an embodiment of this invention; and
FIG. 11 is a schematic diagram of a structure of a vehicle according to an embodiment of this invention.

### DESCRIPTION OF EMBODIMENTS

Currently, an EMB system may be used for braking a vehicle. After an EPB unit is integrated into the EMB system, the EPB unit can lock a motion mechanism of the EMB system to maintain braking. However, an application scope of a current EPB unit is limited, stepless change (which may also be referred to as consecutive change) cannot be implemented, and a vehicle may easily slide when parking force increases.

In view of this, embodiments of this invention provide a parking mechanism that can be integrated into an EMB system, to resolve the foregoing problems. To make objectives, technical solutions, and advantages of this invention clearer, the following further describes this invention in detail with reference to accompanying drawings.

Terms used in embodiments are merely intended to describe specific embodiments, but are not intended to limit this invention. Terms "one", "a", "the", "the foregoing", "this", and "the one" of singular forms used in this specification and the appended claims of this application are also intended to include plural forms like "one or more", unless otherwise specified in the context clearly.

Reference to "one embodiment" or "some embodiments" described in this specification or the like means that one or more embodiments of this invention include a particular feature, structure, or characteristic described in combination with the embodiment. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. The terms "include", "have", and their variants all mean "include but are not limited to", unless otherwise specifically emphasized in other ways.

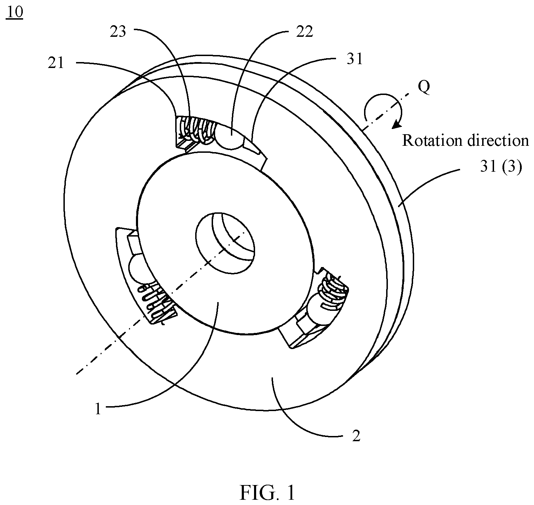

Refer to FIG. 1. An embodiment of this invention provides a parking mechanism 10. The parking mechanism 10 may be integrated into a brake system similar to an EMB system to brake a device such as a vehicle. The parking mechanism 10 specifically includes a wheel disc 1, a wedge disc 2, and a drive assembly 3. The wheel disc 1 is fastened to a motor shaft of the brake system during mounting, and the motor shaft of the brake system is equivalent to a motion unit during working. To be specific, the wheel disc 1 and the motor shaft move synchronously during working. The wedge disc 2 is fastened relative to a motor housing of the brake system during mounting, and the motor housing of the brake system is equivalent to a fastening unit during working. To be specific, during working, the wedge disc 2 is fastened relative to the motor housing, the motor shaft moves relative to the motor housing, and the wheel disc 1 also moves with the motor shaft and relative to the wedge disc 2.

The wheel disc 1 is of a disc-shaped structure, equivalent to a cylinder with a low height, and has two opposite surfaces. A distance between the two surfaces is equivalent to the height of the cylinder, that is, a thickness of the wheel disc 1. An axis of the wheel disc 1 is aligned with an axis Q of the motor shaft, so that the wheel disc 1 co-axially rotates with the motor shaft, and the wheel disc 1 and the motor shaft have a same rotational angular velocity. The wedge disc 2 may also be of a disc-shaped structure, equivalent to a cylinder with a low height, and has two opposite surfaces. A distance between the two surfaces is equivalent to the height of the cylinder, that is, a thickness of the wedge disc 2. The wedge disc 2 has a cylindrical hole extending along an axis of the wedge disc 2 and penetrating the thickness of the wedge disc 2. An inner diameter of the cylindrical hole is equivalent to a size of a radial peripheral surface of the wheel disc 1, so that the wedge disc 2 can be sleeved on the wheel disc 1, and the axis of the sleeved wedge disc 2 is aligned with the axis of the wheel disc 1. In this manner, the axis of the wheel disc 1, the axis of the wedge disc 2, and the axis Q of the motor shaft are aligned. When the brake system is not at a standstill, the motor shaft of the brake system rotates normally, and the wheel disc 1 rotates relative to the wedge disc 2 by using the axis Q of the motor shaft as a rotation axis. To implement braking of the brake system, the motor shaft of the brake system needs to be braked to reduce a rotation rate of the motor shaft of the brake system until the motor shaft of the brake system stops rotating (that the motor shaft of the brake system stops rotating is equivalent to that the brake system is at a standstill).

At least one wedge groove 21 with an opening facing the wheel disc 1 is formed on a surface of the wedge disc 2 facing the wheel disc 1. In FIG. 1, the cylindrical hole is the surface of the wedge disc 2 facing the wheel disc 1, and the wedge groove 21 is formed on an inner wall of the cylindrical hole. In a peripheral direction of the cylindrical hole, three wedge grooves 21 are evenly disposed on the inner wall of the cylindrical hole of the wedge disc 2. With reference to any one of the wedge grooves 21, accommodation space is formed between the wedge groove 21 and a radial outer surface of the wheel disc 1.

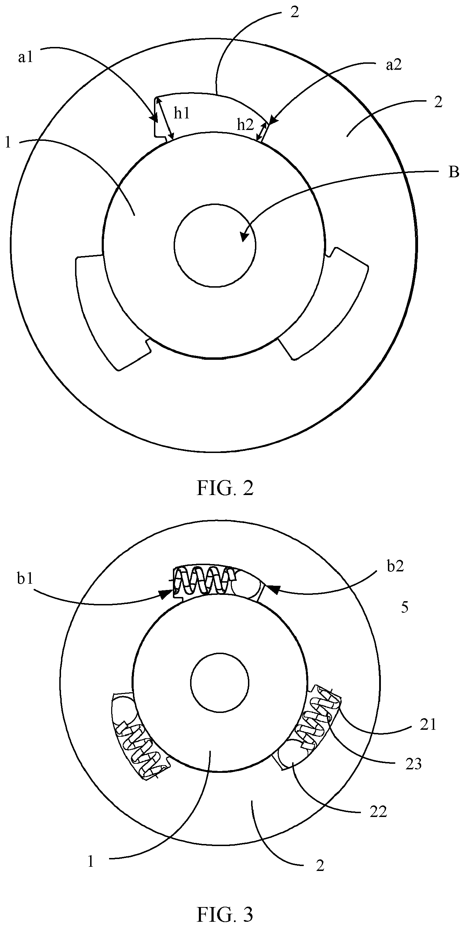

With reference to a specific structure of the wheel disc 1 and the wedge disc 2 shown in FIG. 2 and cooperation of the wheel disc 1 and the wedge disc 2, the wheel disc 1 has a round hole A at a center of the wheel disc 1 in an axis direction, and the round hole A may be sleeved on the motor shaft of the brake system during mounting. Specifically, the wheel disc 1 may be fastened to the motor shaft of the brake system by using a spline or the like, to ensure that the wheel disc 1 can rotate with the motor shaft of the brake system by using the axis Q of the motor shaft as a rotation axis. The wedge groove 21 has a first end a1 and a second end a2. In a direction from a bottom of the wedge groove 21 to the wheel disc 1, a groove depth h1 at the first end a1 is greater than a groove depth h2 at the second end a2. In a direction from the first end a1 to the second end a2 (which is equivalent to a rotation direction in FIG. 1), the accommodation space formed between the wedge groove 21 and the wheel disc 1 gradually decreases. The groove depth herein is a size of the wedge groove 21 in a radial direction of the motor shaft of the brake system, and the radial direction of the motor shaft of the brake system is a direction perpendicular to the axis of the motor shaft and passing through the axis of the motor shaft. It should be understood that, when the wheel disc 1 and the wedge disc 2 cooperate in a manner other than that shown in FIG. 1 and FIG. 2, a position of the wedge groove 21 needs to be adjusted accordingly, provided that a distance between the bottom of the wedge groove 21 and the wheel disc 1 meets the foregoing requirement.

With reference to FIG. 2 and still to FIG. 1, a movable part 22 in contact with the wheel disc 1 is disposed in the wedge groove 21. In the radial direction of the motor shaft of the brake system, the groove depth at the first end a1 of the wedge groove 21 is greater than a size of the movable part 22, and the groove depth at the second end a2 of the wedge groove 21 is less than the size of the movable part 22. After the wedge disc 2 and the wheel disc 1 are assembled, the wedge disc 2 is sleeved on the wheel disc 1, and the accommodation space formed between the wedge groove 21 and the wheel disc 1 is used for motion of the movable part 22. Based on a size limitation of the movable part 22 and the wedge groove 21, the movable part 22 is in contact with both the wheel disc 1 and the inner wall of the wedge groove 21 when the movable part 22 is at a position between the first end a1 and the second end a2 of the wedge groove 21, and the movable part 22 at the position is not subject to stress. When the movable part 22 moves towards the first end a1 of the wedge groove 21, the accommodation space between the wedge groove 21 and the wheel disc 1 gradually increases, and the movable part 22 may be in contact with either the inner wall of the wedge groove 21 or the wheel disc 1. This does not affect rotation of the wheel disc 1 with the motor shaft of the brake system and relative to the wedge disc 2. When the movable part 22 moves towards the second end a2 of the wedge groove 21, the accommodation space between the wedge groove 21 and the wheel disc 1 gradually decreases, and the movable part 22 is squeezed by the inner wall of the wedge groove 21 and the wheel disc 1 at the same time. Because a structure of the wedge disc 2 is relatively stable, the wedge groove 21 squeezes the movable part 22, and the movable part 22 acts on the wheel disc 1, so that the friction between the movable part 22 and the wheel disc 1 gradually increases, and the gradually increasing friction affects rotation of the wheel disc 1 relative to the wedge disc 2 and with the motor shaft of the brake system. When the friction increases to a critical value, the wheel disc 1 is static relative to the movable part 22. To be specific, the wheel disc 1 is static relative to the wedge disc 2. That the wheel disc 1 is static is equivalent to that the motor shaft of the brake system is locked relative to the motor housing, that is, the brake system is at a standstill. It should be understood that a change of the space between the first end a1 and the second end a2 of the wedge groove 21 is gradual, so that motion of the movable part 22 from the first end a1 to the second end a2 may also be considered as gradual. In view of this, in the brake system, a change of parking force of the brake system is gradual. This implements stepless adjustment of parking force.

To control the movable part 22 to move in the wedge groove 21 to change motion of the wheel disc 1 relative to the wedge disc 2, for example, as shown in FIG. 1, an elastic part 23 shown as a spring is further disposed between the movable part 22 and the first end a1 of the wedge groove 21 in the parking mechanism 10 provided in this embodiment of this invention. The elastic part 23 is in a compressed energy storage state. To be specific, the elastic part 23 has a trend of driving the movable part 22 to move from the first end a1 to the second end a2. In a condition without interference from external force, as shown in FIG. 3, with reference to the foregoing analysis, the elastic part 23 drives the movable part 22 to the second end b2 of the wedge groove 21. After the wheel disc 1 is locked, the motor shaft of the brake system is locked, and the brake system is at a standstill.

The drive assembly 3 is configured to drive the movable part 22 to move from the second end a2 to the first end a1, so that the friction between the movable part 22 and the wheel disc 1 decreases. When the drive assembly 3 drives the movable part 22 to move from the second end a2 to the first end a1, until the friction between the movable part 22 and the wheel disc 1 decreases to almost disappearing, locking on the wheel disc 1 is canceled, the motor shaft of the brake system rotates normally, where the motor shaft is fixedly connected to the wheel disc 1, and the brake system is released from a standstill.

Based on the structure and the cooperation manner of the wheel disc 1 and the wedge disc 2, the drive assembly 3 may include a drive disc 31 of a circular disc structure. The drive disc 31 is also equivalent to a cylinder with a low height, and also has two opposite surfaces. A distance between the two surfaces is equivalent to the height of the cylinder, that is, a thickness of the drive disc 31. The wedge disc 2 is sleeved on the wheel disc 1 in a radial direction of the motor shaft of the brake system, and in the direction of the axis Q of the motor shaft of the brake system, the drive disc 31 is disposed on any side of the wheel disc 1 and the wedge disc 2. A drive block 311 that extends into the wedge groove 21 is formed on the drive disc 31, and the drive block 311 is located on a side of the movable part 22 away from the elastic part 23, to facilitate the drive block 311 to apply, to the movable part 22, force that drives the movable part 22 to move from the second end a2 to the first end a1.

In some embodiments, the movable part 22 is cylindrical, and the cylindrical movable part 22 is disposed in the wedge groove 21 in the following manner. An axis of the cylindrical movable part 22 is parallel to the axis Q of the motor shaft of the brake system, and a radial peripheral surface of the cylindrical movable part 22 is in contact with the inner wall of the wedge groove 21 and/or the wheel disc 1. In some other embodiments, the movable part 22 may alternatively be spherical, and a manner of disposing the spherical movable part in the wedge groove 21 is not limited. The motion of the movable part 22 in the two forms in the wedge groove 21 may be rolling, or may be translation, or may be a combination of rolling and translation, provided that the motion of the movable part 22 in the wedge groove 21 can control the braking state of the motor shaft of the brake system. In addition, an action manner between the movable part 22 and the wheel disc 1 may be replaced with a butterfly friction block structure, a ratchet wheel structure, a ratchet disc structure, or the like based on an application requirement. Details are not described herein.

It should be understood that, in FIG. 1, the elastic part 23 is a spring, and the movable part 22 is spherical. A spiral structure of the spring enables a side of the spring in contact with the movable part 22 to be circular-like, so that the spring can better fit into a spherical surface of the spherical movable part 22, and guide and support the motion of the movable part 22 in the wedge groove 21.

To implement electronic braking, the drive assembly 3 in the parking mechanism 10 provided in embodiments of this invention further includes a power source, and the power source drives the drive disc 31 to rotate around the axis of the motor shaft of the brake system.

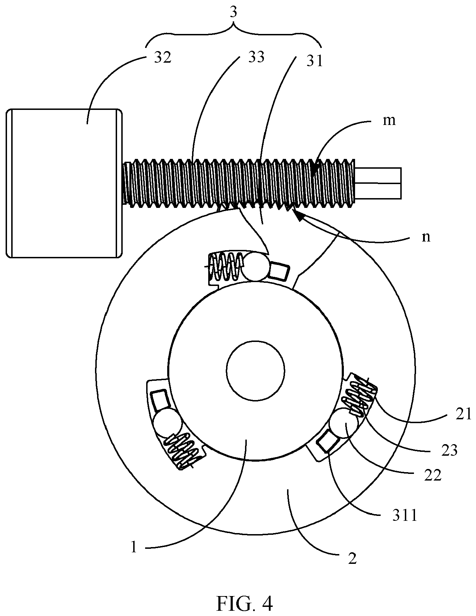

A parking mechanism 10 is shown in FIG. 4. The power source may be specifically, for example, an electromagnetic drive structure 32. The drive assembly 3 further includes a transmission rod 33. An end of the transmission rod 33 is connected to a power output end of the electromagnetic drive structure 32. The electromagnetic drive structure 32 drives the transmission rod 33 to rotate around an axis of the transmission rod 33. An outer thread m is formed by rotating a peripheral surface of the transmission rod 33 around the axis of the transmission rod 33. Accordingly, a worm gear n is formed at an edge of the drive disc 31 (to clearly show the worm gear n, in FIG. 3, a part of the wedge disc 2 is hollowed to expose the drive disc 31 located behind the wedge disc 2), and the worm gear n is engaged with the outer thread m, so that the drive disc 31 and the transmission rod 33 form a worm gear and worm assembly (the drive disc 31 is equivalent to a worm gear, and the transmission rod 33 is equivalent to a worm).

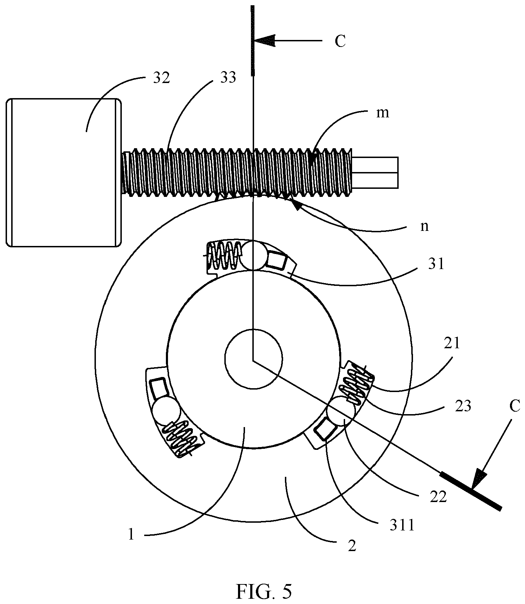

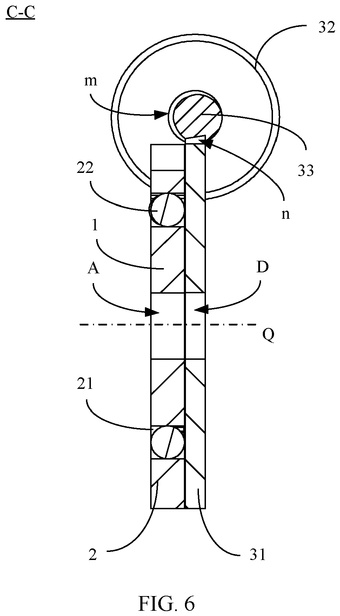

To more clearly show a transmission relationship of the parking mechanism 10 in FIG. 4, FIG. 6 shows a schematic diagram of a C-C corner position sectional view of a structure of the parking mechanism 10 shown in FIG. 5. The round hole A formed at the center of the wheel disc 1 is used to fasten the wheel disc 1 on the motor shaft of the brake system during use, so that the axis of the wheel disc 1 is aligned with the axis Q of the motor shaft. The wedge disc 2 is sleeved on the wheel disc 1, and the axis of the wedge disc 2 is aligned with the axis of the wheel disc 1. The drive disc 31 is located on any side of the wheel disc 1 and the wedge disc 2. A through hole D for the motor shaft to pass through is located at a center of the drive disc 31, and an axis of the through hole D is aligned with the axis Q of the motor shaft. Finally, the axis of the wheel disc 1, the axis of the wedge disc 2, and the axis of the drive disc 31 are aligned with the axis Q of the motor shaft of the brake system. In addition, the outer thread m on the transmission rod 33 is engaged with the worm gear n on the wedge disc 2, so that rotation of the transmission rod 33 around the axis of the transmission rod 33 is converted into rotation of the wedge disc 2 around the axis of the motor shaft of the brake system (which is equivalent to rotation conversion at an angle of 90°).

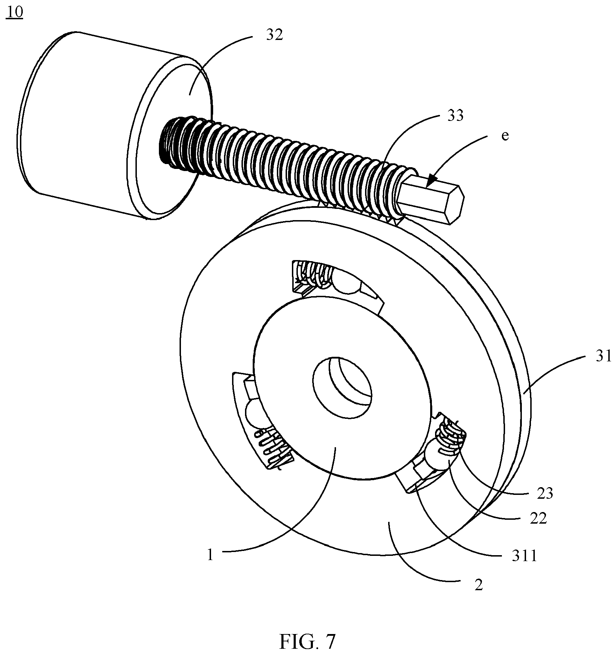

With reference to FIG. 4 and an isometric diagram of the parking mechanism 10 shown in FIG. 7, when the electromagnetic drive structure 32 drives the transmission rod 33 to rotate around the axis of the transmission rod 33, the electromagnetic drive structure 32 drives the drive disc 31 to rotate around the axis of the motor shaft of the brake system, and the rotation of the drive disc 31 enables the drive block 311 to move in the wedge groove 21. Due to the elastic part 23, when the drive block 311 moves from the first end b 1 to the second end b2 of the wedge groove 21, the elastic part 23 drives the movable part 22 to move in a direction from the first end b1 to the second end b2 of the wedge groove 21, so that the movable part 22 moves to a position with small accommodation space formed between the wedge groove 21 and the wheel disc 1. The friction between the movable part 22 and the wheel disc 1 increases until the motor shaft of the brake system is locked. When the drive block 311 moves from the second end b2 to the first end b1 of the wedge groove 21, the drive block 311 drives the movable part 22 to move in a direction from the second end b2 to the first end b1 of the wedge groove 21 (that is, moving in a direction towards the compression elastic part 23). This enables the movable part 22 to move towards a position with relatively large accommodation space formed between the wedge groove 21 and the wheel disc 1, and reduces the friction between the movable part 22 and the wheel disc 1 until locking of the motor shaft of the brake system is released. It should be understood that the worm gear and worm assembly including the transmission rod 33 and the drive disc 31 further have a self-locking function. When the motor shaft of the brake system is braked, the electromagnetic drive structure 32 may be powered off, without affecting the braking state. When the parking mechanism 10 fails, the movable part 22 may be moved from the second end a2 to the first end a1 of the wedge groove 21, without interference with rotation of the wheel disc 1 with the motor shaft. This reduces harm caused by failure of the parking mechanism 10.

Still with reference to FIG. 7, a wrench interface e in a hexagonal prism shape is further disposed at an end of the transmission rod 33 away from the electromagnetic drive structure 32. During use, a worker may directly sleeve a wrench on the wrench interface e to operate the transmission rod 33, to manually release braking of the motor shaft of the brake system. It should be understood that this is an alternative solution. To be specific, when the power source fails, the wrench interface e facilitates a worker to manually unlock the motor shaft of the brake system.

In some alternative solutions, the wrench interface e may also be in an inner hexagonal shape, a petal shape (for example, a torx shape), or the like. Details are not described herein.

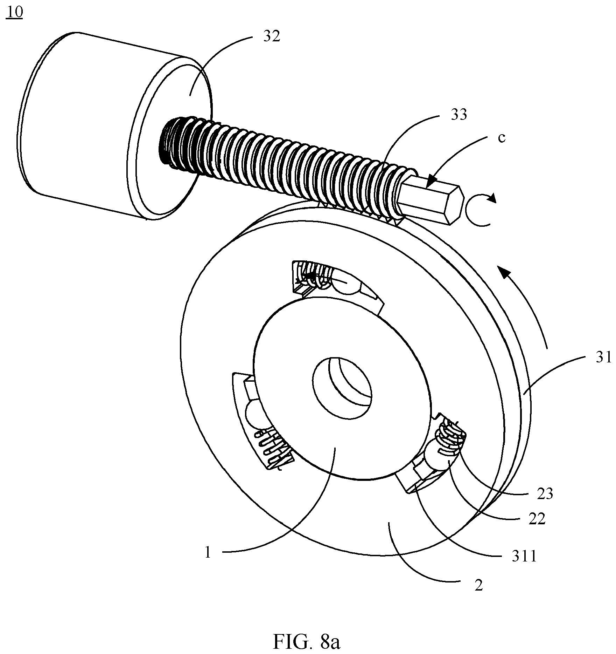

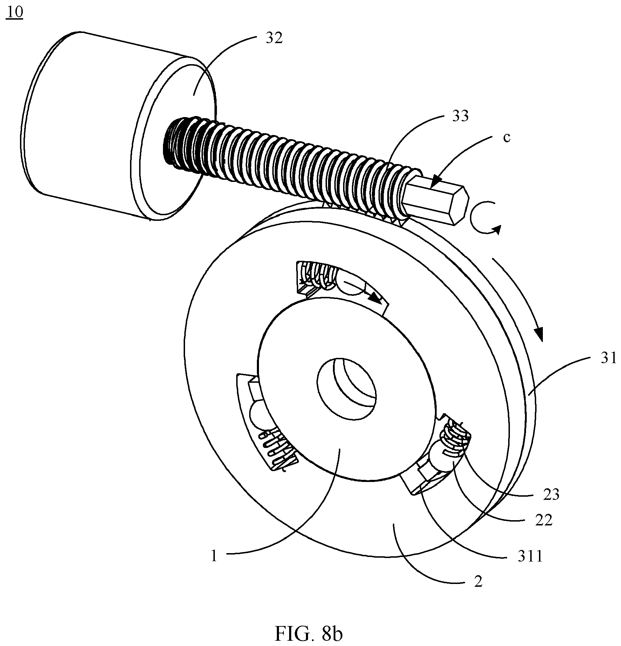

For example, the parking mechanism 10 in FIG. 7 is used in an electronic brake system. With reference to FIG. 8a and FIG. 8b, the following describes in detail a working principle and a working process of the parking mechanism 10 provided in embodiments of this invention.

When the electronic brake system is at a standstill, the electromagnetic drive structure 32 of the drive assembly 3 is powered on to drive a transmission rod 33 to rotate in a direction shown in FIG. 8a (a rotation direction shown at the end of the transmission rod 33 away from the electromagnetic drive structure 32 in FIG. 8a), and the transmission rod 33 transmits power to the drive disc 31, so that the drive disc 31 rotates in a direction shown in FIG. 8a (a rotation direction at a side of the drive disc 31 in FIG. 8a). The drive disc 31 rotates, and the drive block 311 is enabled to move in the wedge groove 21 in a direction from the second end b2 to the first end b1, to drive the movable part 22. Therefore, the movable part 22 is enabled to move against pressure of the elastic part 23 and from the second end b2 to the first end b1 in the wedge groove 21. The friction between the movable part 22 and the wheel disc 1 gradually decreases or even disappears. The wheel disc 1 rotates normally with the motor shaft of the brake system. To be specific, the motor shaft of the brake system is not locked, and the brake system is not at a standstill. When the electronic brake system needs to park a vehicle, the electromagnetic drive structure 32 is started and powered on to drive the transmission rod 33 to rotate in a direction shown in FIG. 8b (a rotation direction shown at the end of the transmission rod 33 away from the electromagnetic drive structure 32 in FIG. 8b), and the transmission rod 33 transmits power to the drive disc 31, so that the drive disc 31 rotates in a direction shown in FIG. 8b (a rotation direction at a side of the drive disc 31 in FIG. 8b). The drive disc 31 rotates, and the drive block 311 is enabled to move in the wedge groove 21 in a direction from the first end b1 to the second end b2. In this case, the drive block 311 does not act on the movable part 22, and the movable part 22 moves from the first end b1 to the second end b2 in the wedge groove 21 under the pressure of the elastic part 23. The friction between the movable part 22 and the wheel disc 1 gradually increases, and causes resistance to rotation of the motor shaft of the brake system, until the rotation of the motor shaft of the brake system is locked, and the brake system is at a standstill.

In conclusion, the parking mechanism 10 provided in embodiments of this invention is equivalent to an overrunning clutch (which may also be referred to as a one-way clutch), and the motor shaft of the brake system is enabled to implement the following two states through cooperation of transmission structures of the parking mechanism 10: Cooperation of the movable part 22 and the wedge groove 21 implements a one-way clutch effect (one-way locking of the motor shaft), and braking of the motor shaft of the brake system is fully released without affecting normal operation of the motor shaft of the brake system.

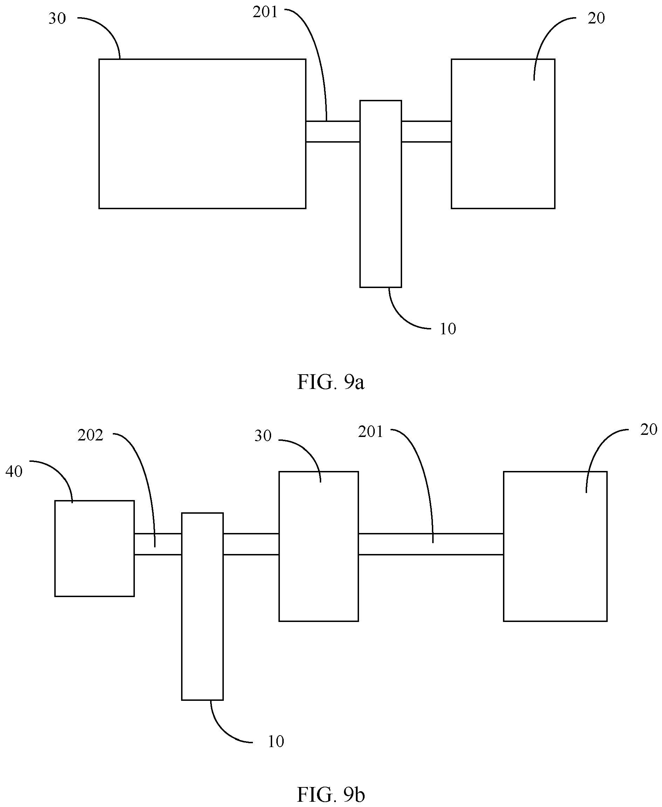

Based on a structure of the parking mechanism 10, for example, the parking mechanism 10 shown in FIG. 3, an embodiment of this invention further provides an EMB system 100. As shown in FIG. 9a, the EMB system 100 may include a motor 20, a reducer 30, and the parking mechanism 10 according to any one of the foregoing embodiments. The motor 20 has a motor shaft 201. The motor shaft 201 is equivalent to a power output end of the motor 20, and is in transmission connection to the reducer 30. The motor 20 transmits power to the reducer 30 by using the motor shaft 201, and a wheel disc 1 of the parking mechanism 10 is fixedly connected to the motor shaft 201.

It should be understood that a function of the parking mechanism 10 herein is to lock the motion of the motor shaft 201 of the motor 20. The entire EMB system 100 only needs to lock power transmission. Therefore, an EMB system 100 shown in FIG. 9b further includes a ball screw 40 connected to a reducer 30 by using a transmission shaft 202, and a wheel disc 1 of a parking mechanism 10 may be fixedly connected to the transmission shaft 202. In conclusion, the wheel disc 1 of the parking mechanism 10 may be fixedly connected to any one of rotation axes in the entire EMB system 100, and the foregoing technical effects can be achieved. Details are not described herein again.

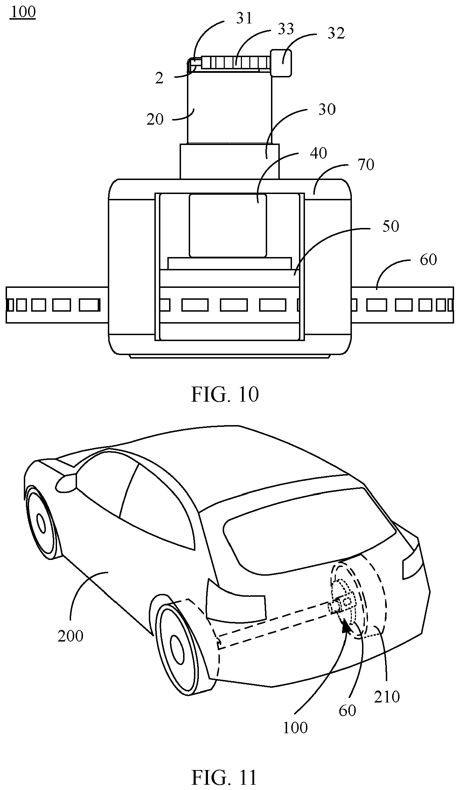

Specifically, with reference to a transmission connection structure of a specific EMB system 100 shown in FIG. 10, the EMB system 100 may be used in a vehicle. The EMB system 100 specifically includes a motor 20, a reducer 30, a ball screw 40, a friction sheet 50, a friction disc 60, and a clamp 70. The motor 20 is in transmission connection to the reducer 30, the ball screw 40, the friction sheet 50, and the friction disc 60 in an order. During use, the friction disc 60 may be fastened to a wheel hub of the vehicle, and the clamp 70 may be fastened to a suspension of the vehicle. A wheel disc 1 (which is blocked by a wedge disc 2 herein and is not shown) of a parking mechanism 10 is fastened, in alignment with an axis of a motor shaft 201, on the motor shaft 201 at a side of the motor 20 away from the reducer 30, and the wheel disc 1 rotates synchronously with the motor shaft 201. A wedge disc 2 is fastened relative to a motor housing of the motor 20. To be specific, the wheel disc 1 rotates relative to the wedge disc 2.

With reference to the structure of the parking mechanism 10 shown in FIG. 3, a working principle of an EMB system 100 provided in embodiments of this invention is described. During working, when the EMB system 100 does not need electronic braking, an electromagnetic drive structure 32 of a drive assembly 3 drives a drive block 311 on a drive disc 31 to move in a wedge groove 21 in a direction from a second end b2 to a first end b 1, to drive a movable part 22 to move against pressure of an elastic part 23 and from the second end b2 to the first end b1 in the wedge groove 21. In this case, friction between the movable part 22 and a wheel disc 1 gradually decreases or even disappears, the wheel disc 1 rotates normally with a motor shaft 201. To be specific, the motor shaft 201 is not locked, and the EMB system 100 is not at a standstill. When the EMB system 100 needs electronic braking, the electromagnetic drive structure 32 of the drive assembly 3 drives the drive block 311 on the drive disc 31 to move in the wedge groove 21 in a direction from the first end b1 to the second end b2. The drive block 311 does not act on the movable part 22, and the movable part 22 moves from the first end b1 to the second end b2 in the wedge groove 21 under pressure of the elastic part 23. The friction between the movable part 22 and the wheel disc 1 gradually increases, and causes resistance to rotation of the motor shaft 201 of the EMB system 100 until the rotation of the motor shaft 201 of the EMB system 100 is locked. Finally, a friction disc 60 is locked, and the EMB system 100 is at a standstill and implements a parking function.

When software of the EMB system 100 drives the motor 20 to increase parking force, the motor shaft 201 rotates with the wheel disc 1 around an axis of the motor shaft 201 and in the wedge groove 21 in a direction from the second end b2 to the first end b1. The drive assembly 3 drives the drive block 311 to apply, to the movable part 22, force in a direction from the first end b1 to the second end b2 of the wedge groove 21. Elastic potential energy of the elastic part 23 is insufficient to prevent an action of the movable part 22. When the parking force increases, the friction between the wheel disc 1 and the movable part 22 located in the wedge groove 21 and close to the second end b2 continues to prevent the motor shaft 201 from being reversed. It should be understood that, in a period of increasing parking force, locking between the movable part 22 and the wedge groove 21 is unidirectional, and the transmission rod 33 and the drive disc 31 of the drive assembly 3 do not need to be loosened, so that the EMB system 100 is at a standstill, and the vehicle does not slide.

In addition, a worm gear and worm assembly including the transmission rod 33 and the drive disc 31 of the parking mechanism 10 can implement self-locking, so that the EMB system 100 is purely mechanically parked for a long time, and a motor 20 of the EMB system 100 does not need to be energized for a long time.

It can be learned that the EMB system 100 provided in embodiments of this invention can implement braking by using the foregoing parking mechanism 10. When braking needs to be maintained for a long time, reversal of the motor 20 can be locked, and the motor 20 is enabled to rotate forward without being prevented from increasing force, so that the motor 20 can be powered off and cooled down. As the EMB system 100 uses the parking mechanism 10, when an electrical failure occurs, braking can be released manually, and no additional parking system is required, thereby reducing costs.

Based on the EMB system 100, as shown in FIG. 11, an embodiment of this invention may further provide a vehicle. The EMB system 100 is mounted on a vehicle body 200 of the vehicle. The EMB system 100 may be installed on a wheel hub 210 of the vehicle 200. Specifically, a friction disc 60 of the EMB system 100 is connected to the wheel hub 210. When the EMB system 100 is at a standstill, power of the motor 20 can be transmitted to the friction disc 60 in an order, and the friction disc 60 may achieve braking by braking the wheel hub 210. A working principle and a process of the EMB system 100 have been described in detail in the foregoing descriptions, and details are not described herein again. It should be understood that the vehicle 200 can be braked to standstill with all beneficial effects that can be achieved by the foregoing EMB system 100.

The foregoing descriptions are merely specific implementations of this invention, but are not intended to limit the protection scope of this invention. Therefore, the protection scope of this invention shall be subject to the protection scope of the claims.

## Claims

1. A parking mechanism (10), comprising: a wheel disc (1), a wedge disc (2), and a drive assembly (3), wherein the wheel disc (1) is configured to be fixedly connected to a motor shaft (201) of a brake system, the wedge disc (2) is fastened relative to a motor housing of the brake system, and an axis of the wheel disc (1) and an axis of the wedge disc (2) are aligned with an axis of the motor shaft (201);
a wedge groove (21) with an opening facing the wheel disc (1) is formed on a surface of the wedge disc (2) facing the wheel disc (1), a movable part (22) in contact with the wheel disc (1) is disposed in the wedge groove (21), and in a direction from a bottom of the wedge groove (21) to the wheel disc (1), a groove depth at a first end (a1) of the wedge groove (21) is greater than a size of the movable part (22), and a groove depth at a second end (a2) of the wedge groove (21) is less than the size of the movable part (22);
the parking mechanism (10) being **characterised in that**:
an elastic part (23) is disposed between the movable part (22) and the first end of the wedge groove (21), and the elastic part (23) is in a compressed energy storage state to have a trend of driving the movable part (22) to move from the first end to the second end of the wedge groove (21); and
the drive assembly (3) is configured to drive the movable part (22) to move from the second end to the first end in the wedge groove.

2. The parking mechanism (10) according to claim 1, wherein the wedge disc (2) is in a ring shape, the wedge disc (2) is sleeved on the wheel disc (1), and the wedge groove (21) is formed on an inner surface of the wedge disc (2) in contact with the wheel disc (1).

3. The parking mechanism (10) according to claim 2, wherein the movable part (22) is cylindrical or spherical.

4. The parking mechanism (10) according to any one of claims 1 to 3, wherein the drive assembly (3) comprises a drive disc (31), an axis of the drive disc (31) is aligned with the axis of the motor shaft, and the drive disc (31) rotates relative to the wedge disc (2) and around the axis of the motor shaft; and
the drive disc (31) has a drive block corresponding to the wedge groove (21), and the drive block extends into the wedge groove (21) and is located at a side of the movable part (22) away from the elastic part (23).

5. The parking mechanism (10) according to claim 4, wherein the drive assembly (3) comprises an electromagnetic drive structure (32), and the electromagnetic drive structure is configured to drive the drive disc (31) to rotate by using the axis of the motor shaft (201) of the brake system as a rotation axis.

6. The parking mechanism (10) according to claim 5, wherein the drive assembly (3) further comprises a transmission rod (33) in transmission connection to a power output end of the electromagnetic drive structure (32); and an outer thread is formed by rotating a peripheral surface of the transmission rod around an axis of the transmission rod, a worm gear is formed at an edge of the drive disc (31), and the worm gear is engaged with the thread.

7. The parking mechanism (10) according to claim 6, wherein a wrench interface (c) is disposed at an end of the transmission rod away from the electromagnetic drive structure.

8. The parking mechanism (10) according to any one of claims 1 to 7, wherein the elastic part (23) is a spring or a spring plate.

9. An electronic mechanical brake, EMB, system (100), comprising a motor (20), a reducer (30), and the parking mechanism (10) according to any one of claims 1 to 8, wherein the motor (20) is in transmission connection to the reducer (30) by using a motor shaft; and
a wheel disc (1) of the parking mechanism is fixedly connected to the motor shaft (201), and a wedge disc (2) of the parking mechanism is fastened relative to a motor housing of the motor.

10. A vehicle, comprising a vehicle body (200), a wheel hub (210), and the EMB system according to claim 9, wherein a motor shaft (201) of the EMB system (100) is in transmission connection to the wheel hub (210).

## Patentansprüche

1. Parkmechanismus (10), umfassend: eine Radscheibe (1), eine Keilscheibe (2) und eine Antriebsbaugruppe (3), wobei die Radscheibe (1) zur festen Verbindung mit einer Motorwelle (201) eines Bremssystems ausgelegt ist, wobei die Keilscheibe (2) relativ zu einem Motorgehäuse des Bremssystems befestigt ist und eine Achse der Radscheibe (1) und eine Achse der Keilscheibe (2) mit einer Achse der Motorwelle (201) fluchten;
wobei eine Keilnut (21) mit einer der Radscheibe (1) zugewandten Öffnung an einer der Radscheibe (1) zugewandten Oberfläche der Keilscheibe (2) ausgebildet ist, wobei ein beweglicher Teil (22) in Kontakt mit der Radscheibe (1) in der Keilnut (21) angeordnet ist, und in einer Richtung von einem Boden der Keilnut (21) zu der Radscheibe (1) eine Nuttiefe an einem ersten Ende (a1) der Keilnut (21) größer als eine Größe des beweglichen Teils (22) ist und eine Nuttiefe an einem zweiten Ende (a2) der Keilnut (21) kleiner als die Größe des beweglichen Teils (22) ist;
wobei der Parkmechanismus (10) **dadurch gekennzeichnet ist, dass**:
ein elastischer Teil (23) zwischen dem beweglichen Teil (22) und dem ersten Ende der Keilnut (21) angeordnet ist und sich der elastische Teil (23) in einem komprimierten Energiespeicherzustand befindet, sodass er den beweglichen Teil (22) tendenziell zur Bewegung von dem ersten Ende zu dem zweiten Ende der Keilnut (21) antreibt; und
die Antriebsbaugruppe (3) dazu ausgelegt ist, den beweglichen Teil (22) so anzutreiben, dass es sich in der Keilnut von dem zweiten Ende zu dem ersten Ende bewegt.

2. Parkmechanismus (10) nach Anspruch 1, wobei die Keilscheibe (2) ringförmig ist, die Keilscheibe (2) auf die Radscheibe (1) aufgesetzt ist und die Keilnut (21) an einer Innenfläche der Keilscheibe (2) in Kontakt mit der Radscheibe (1) ausgebildet ist.

3. Parkmechanismus (10) nach Anspruch 2, wobei der bewegliche Teil (22) zylindrisch oder kugelförmig ist.

4. Parkmechanismus (10) nach einem der Ansprüche 1 bis 3, wobei die Antriebsbaugruppe (3) eine Antriebsscheibe (31) umfasst, wobei eine Achse der Antriebsscheibe (31) mit der Achse der Motorwelle fluchtet, und die Antriebsscheibe (31) sich relativ zu der Keilscheibe (2) und um die Achse der Motorwelle dreht; und
die Antriebsscheibe (31) einen Antriebsblock aufweist, der der Keilnut (21) entspricht, und sich der Antriebsblock in die Keilnut (21) erstreckt und an einer von dem elastischen Teil (23) entfernten Seite des beweglichen Teils (22) angeordnet ist.

5. Parkmechanismus (10) nach Anspruch 4, wobei die Antriebsbaugruppe (3) eine elektromagnetische Antriebsstruktur (32) umfasst und die elektromagnetische Antriebsstruktur dazu ausgelegt ist, die Antriebsscheibe (31) unter Verwendung der Achse der Motorwelle (201) des Bremssystems als Drehachse drehend anzutreiben.

6. Parkmechanismus (10) nach Anspruch 5, wobei die Antriebsbaugruppe (3) ferner eine Übertragungsstange (33) in Übertragungsverbindung mit einem Leistungsausgangsende der elektromagnetischen Antriebsstruktur (32) umfasst; und durch Drehen einer Umfangsfläche der Übertragungsstange um eine Achse der Übertragungsstange ein Außengewinde gebildet ist, an einer Kante der Antriebsscheibe (31) ein Schneckenrad gebildet ist und das Schneckenrad mit dem Gewinde in Eingriff steht.

7. Parkmechanismus (10) nach Anspruch 6, wobei eine Schraubenschlüsselschnittstelle (c) an einem Ende der Übertragungsstange entfernt von der elektromagnetischen Antriebsstruktur angeordnet ist.

8. Parkmechanismus (10) nach einem der Ansprüche 1 bis 7, wobei der elastische Teil (23) eine Feder oder ein Federblech ist.

9. Elektronisches mechanisches Bremssystem (EMB-System) (100), umfassend einen Motor (20), ein Untersetzungsgetriebe (30) und den Parkmechanismus (10) nach einem der Ansprüche 1 bis 8, wobei der Motor (20) unter Verwendung einer Motorwelle in Übertragungsverbindung mit dem Untersetzungsgetriebe (30) steht; und
wobei eine Radscheibe (1) des Parkmechanismus fest mit der Motorwelle (201) verbunden und eine Keilscheibe (2) des Parkmechanismus relativ zu einem Motorgehäuse des Motors befestigt ist.

10. Fahrzeug, umfassend eine Fahrzeugkarosserie (200), eine Radnabe (210) und das EMB-System nach Anspruch 9, wobei eine Motorwelle (201) des EMB-Systems (100) in Übertragungsverbindung mit der Radnabe (210) steht.

## Revendications

1. Mécanisme de stationnement (10), comprenant : un disque de roue (1), un disque de coin (2) et un ensemble d'entraînement (3), le disque de roue (1) étant configuré pour être relié de manière fixe à un arbre moteur (201) d'un système de freinage, le disque de coin (2) est fixé par rapport à un carter de moteur du système de freinage, et un axe du disque de roue (1) et un axe du disque de coin (2) sont alignés avec un axe de l'arbre moteur (201) ;
une rainure de coin (21) avec une ouverture faisant face au disque de roue (1) est formée sur une surface du disque de coin (2) faisant face au disque de roue (1), une partie mobile (22) en contact avec le disque de roue (1) est disposée dans la rainure de coin (21), et dans une direction allant d'un fond de la rainure de coin (21) au disque de roue (1), une profondeur de rainure au niveau d'une première extrémité (a1) de la rainure de coin (21) est supérieure à une taille de la partie mobile (22), et une profondeur de rainure au niveau d'une seconde extrémité (a2) de la rainure de coin (21) est inférieure à la taille de la partie mobile (22) ;
le mécanisme de stationnement (10) étant **caractérisé en ce que** :
une partie élastique (23) est disposée entre la partie mobile (22) et la première extrémité de la rainure de coin (21), et la partie élastique (23) est dans un état de stockage d'énergie comprimé pour avoir une tendance à entraîner la partie mobile (22) pour se déplacer de la première extrémité à la seconde extrémité de la rainure de coin (21) ; et
l'ensemble d'entraînement (3) est configuré pour entraîner la partie mobile (22) pour qu'elle se déplace de la seconde extrémité à la première extrémité dans la rainure de coin.

2. Mécanisme de stationnement (10) selon la revendication 1, dans lequel le disque de coin (2) est en forme d'anneau, le disque de coin (2) est emmanché sur le disque de roue (1), et la rainure de coin (21) est formée sur une surface intérieure du disque de coin (2) en contact avec le disque de roue (1).

3. Mécanisme de stationnement (10) selon la revendication 2, dans lequel la partie mobile (22) est cylindrique ou sphérique.

4. Mécanisme de stationnement (10) selon l'une quelconque des revendications 1 à 3, dans lequel l'ensemble d'entraînement (3) comprend un disque d'entraînement (31), un axe du disque d'entraînement (31) est aligné avec l'axe de l'arbre moteur, et le disque d'entraînement (31) tourne par rapport au disque de coin (2) et autour de l'axe de l'arbre moteur ; et
le disque d'entraînement (31) comporte un bloc d'entraînement correspondant à la rainure de coin (21), et le bloc d'entraînement s'étend dans la rainure de coin (21) et est situé sur un côté de la partie mobile (22) éloigné de la partie élastique (23).

5. Mécanisme de stationnement (10) selon la revendication 4, dans lequel l'ensemble d'entraînement (3) comprend une structure d'entraînement électromagnétique (32), et la structure d'entraînement électromagnétique est configurée pour entraîner le disque d'entraînement (31) en rotation en utilisant l'axe de l'arbre moteur (201) du système de freinage comme axe de rotation.

6. Mécanisme de stationnement (10) selon la revendication 5, dans lequel l'ensemble d'entraînement (3) comprend en outre une tige de transmission (33) en liaison de transmission avec une extrémité de sortie de puissance de la structure d'entraînement électromagnétique (32) ; et un filetage extérieur est formé par rotation d'une surface périphérique de la tige de transmission autour d'un axe de la tige de transmission, un engrenage à vis sans fin est formé au niveau d'un bord du disque d'entraînement (31), et l'engrenage à vis sans fin est en prise avec le filetage.

7. Mécanisme de stationnement (10) selon la revendication 6, dans lequel une interface de clé (c) est disposée à une extrémité de la tige de transmission éloignée de la structure d'entraînement électromagnétique.

8. Mécanisme de stationnement (10) selon l'une quelconque des revendications 1 à 7, dans lequel la pièce élastique (23) est un ressort ou une plaque à ressort.

9. Système de frein mécanique électronique, EMB, (100), comprenant un moteur (20), un réducteur (30) et le mécanisme de stationnement (10) selon l'une quelconque des revendications 1 à 8, dans lequel le moteur (20) est en liaison de transmission avec le réducteur (30) en utilisant un arbre moteur ; et
un disque de roue (1) du mécanisme de stationnement est relié de manière fixe à l'arbre moteur (201), et un disque de coin (2) du mécanisme de stationnement est fixé par rapport à un carter de moteur du moteur.

10. Véhicule, comprenant une carrosserie de véhicule (200), un moyeu de roue (210) et le système EMB selon la revendication 9, dans lequel un arbre moteur (201) du système EMB (100) est en liaison de transmission avec le moyeu de roue (210).
